# EUROPÄISCHE PATENTSCHRIFT

(11) **EP 3 511 920 B1**
(45) Veröffentlichungstag und Bekanntmachung des Hinweises auf die Patenterteilung: **06.04.2022**
(21) Anmeldenummer: 19150471.1
(22) Anmeldetag: 07.01.2019
(51) Int. Cl.: G06N 3/08, G06N 3/04, G08G 1/01, G08G 1/14

(54) **PARKASSISTENZSYSTEM MIT ENTFERNTER KONFIGURATION EINES LOKALEN NEURONALEN NETZES**
PARKING ASSISTANCE SYSTEM WITH REMOTE CONFIGURATION OF A LOCAL NEURONAL NETWORK
SYSTÈME D'AIDE AU STATIONNEMENT À CONFIGURATION À DISTANCE D'UN RÉSEAU NEURONAL LOCAL

(30) Priorität: 12.01.2018 DE 102018100593
(43) Veröffentlichungstag der Anmeldung: 17.07.2019
(73) Patentinhaber: Valeo Schalter und Sensoren GmbH, 74321 Bietigheim-Bissingen (DE)
(72) Erfinder: Heimberger, Markus, 74321 Bietigheim-Bissingen (DE); Bariant, Jean Francois, 74321 Bietigheim-Bissingen (DE)
(74) Vertreter: Pothmann, Karsten

(56) Entgegenhaltungen:
- DE-A1-102007 015 227
- DE-A1-102011 086 268
- DE-A1-102012 216 994
- DE-A1-102014 217 900
- DE-A1-102015 007 493
- DE-A1-102016 000 493
- US-A1- 2007 203 616

## Beschreibung

Die Erfindung betrifft ein Verfahren zum Betreiben eines Parkassistenzsystems für zumindest ein Kraftfahrzeug. Die Erfindung betrifft auch ein Parkassistenzsystem für zumindest ein Kraftfahrzeug mit einer Parkassistenzeinrichtung, welche eine Umgebungs-Erfassungseinrichtung zum Erfassen einer Umgebung des Kraftfahrzeugs in einer Parkanlage aufweist, sowie mit einer fahrzeugexternen Recheneinrichtung.

Zunehmend halten in Kraftfahrzeugen Parkassistenzeinrichtungen zum teil- oder vollautomatisierten Parken des jeweiligen Kraftfahrzeugs Einzug. Dabei kommen mehr und mehr auch Parkassistenzeinrichtungen zum Einsatz, welche Informationen über eine Umgebung des Kraftfahrzeugs mit anderen Kraftfahrzeugen oder einer fahrzeugexternen Recheneinrichtung teilen oder diese Information von anderen Kraftfahrzeugen oder einer fahrzeugexternen Recheneinrichtung erhalten.

So offenbart beispielsweise die DE 10 2011 084 124 A1 ein Verfahren zum Navigieren eines Fahrzeugs auf einem Parkplatz, wobei das Fahrzeug mithilfe von Sensoren Informationen über eine Umgebung des Fahrzeugs erfasst und das Fahrzeug Informationen über den Parkplatz von einer externen Datenquelle erhält, wobei die Informationen der externen Datenquelle mithilfe von Sensoren weiterer Fahrzeuge erfasst und an die externe Datenquelle übermittelt wurden. Dabei berücksichtigt das Fahrzeug die Informationen der eigenen Sensoren und die Information der externen Datenquelle bei der Navigation auf dem Parkplatz.

Aus der DE 10 2013 100 953 A1 offenbart ein Verfahren zum Auffinden freier Parkplatzpositionen in einem Großraum, nach welchem Daten zu Belegungszuständen von Flächen innerhalb des Großraums erfasst, daraus Informationen über unbelegte Parkplätze abgeleitet und über eine dem Großraum zugeordnete Parkleitzentrale bereitgestellt werden.

Aus der DE 10 2015 206 457 A1 ist ein Einparkassistenzsystem für ein Fahrzeug zum Erfassen eines Parkplatzes in der Umgebung des Fahrzeugs bekannt. Hierfür erfasst eine Sensoreinheit die Anordnung und die Abmessungen des Parkplatzes und den Belegungszustand des Parkplatzes. Diese Daten übermittelt die Sensoreinheit an eine Recheneinheit, wobei die Recheneinheit die durch die Sensoreinheit erfassten Daten über den Parkplatz mit Kartendaten und/oder Belegungsinformationen, die in den digitalen Kartendaten enthalten sind, fusioniert. Dabei können die digitalen Kartendaten und/oder Belegungsinformationen in den digitalen Kartendaten mit einer vom Fahrzeug örtlich getrennten Recheneinheit ausgetauscht werden.

Die DE 10 2012 216 994 A1 offenbart ein Verfahren zur Parkplatzvermittlung, wobei Teilnehmer Informationen über freie Parkplätze ermitteln und diese an ein Cloud-Computing-System übermitteln. Anhand des Cloud-Computing-Systems wird eine große Menge der gesammelten Sensorinformationen über intelligente Data-Mining-Methoden ausgewertet, um eine globale Karte der freien Parkplätze zu bilden und die Parkplatzinformationen werden für andere Fahrzeuge zur Verfügung gestellt.

Es ergibt sich die Aufgabe, die bei einem von einer Parkassistenzeinrichtung eines Kraftfahrzeugs benötigte Infrastruktur bei einem von der Parkassistenzeinrichtung unterstützten Parken des Kraftfahrzeugs zu reduzieren.

Diese Aufgabe wird durch die Gegenstände der unabhängigen Patentansprüche gelöst.

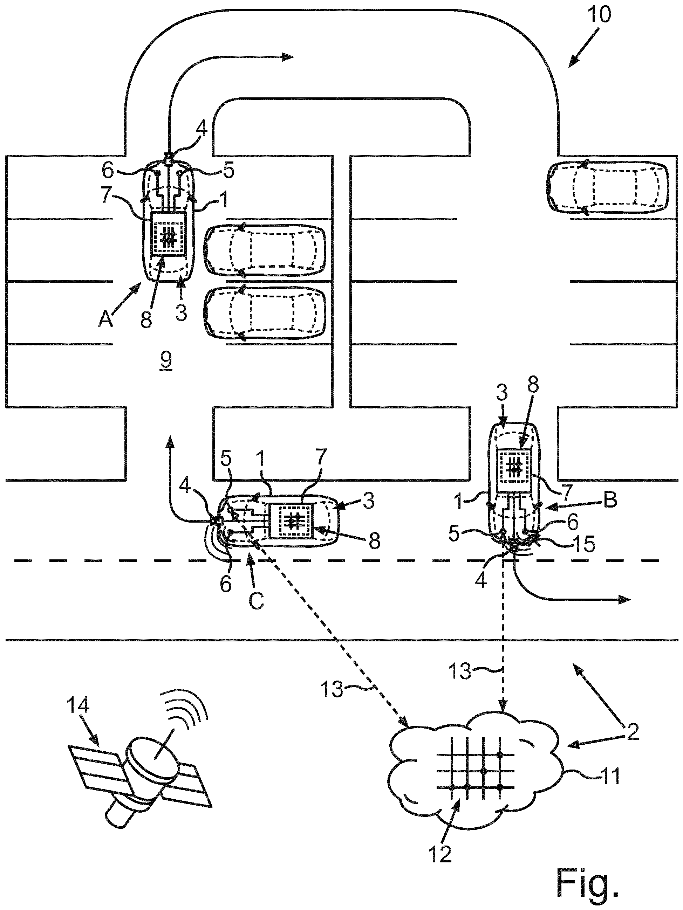

Vorteilhafte Ausführungsformen ergeben sich aus den abhängigen Patentansprüchen, der Beschreibung und der Figur.

Ein Aspekt der Erfindung betrifft ein Verfahren zum Betreiben eines Parkassistenzsystems für zumindest ein Kraftfahrzeug, also für ein oder mehrere Kraftfahrzeuge, mit einer Reihe von Verfahrensschritten. Ein Verfahrensschritt ist dabei ein Erfassen einer Umgebung des Kraftfahrzeugs in einer Parkanlage für Kraftfahrzeuge, also einer Parkanlage, die dem Parken von Kraftfahrzeugen dient, durch eine Umgebungs-Erfassungseinrichtung des einen Kraftfahrzeugs oder, bei mehreren Kraftfahrzeugen, eines der Kraftfahrzeuge. Die Parkanlage kann insbesondere ein Parkhaus und/oder eine Parkgarage sein oder umfassen. Ein weiterer Verfahrensschritt ist ein Übermitteln von durch die Umgebungs-Erfassungseinrichtung erzeugten Umgebungsdaten, welche die erfasste Umgebung repräsentieren, und von Positionsdaten, welche den jeweiligen Umgebungsdaten zugeordnet sind, und welche zumindest eine von dem Kraftfahrzeug befahrene und/oder beparkte, also eingenommene Position in der Umgebung repräsentieren, an eine fahrzeugexterne Recheneinrichtung über eine Datenverbindung. Die Positionsdaten können also eine von dem Kraftfahrzeug eingenommene Fläche in der Umgebung repräsentieren. Das Übermitteln kann dabei auch mit einer Verzögerung erfolgen, beispielsweise erst nach einem Verlassen der Parkanlage. Dadurch kann das Übermitteln auch erfolgreich durchgeführt werden, falls beispielsweise in einer Tiefgarage und in einem Parkhaus die Datenverbindung zu der fahrzeugexternen Recheneinrichtung nicht vorhanden oder gestört ist, beispielsweise in der Parkanlage kein Mobilfunkempfang möglich ist. Aus den Positionsdaten kann somit hervorgehen, welche Positionen das Kraftfahrzeug bei dem Befahren und/oder dem Parken in der Parkanlage eingenommen hat. Dabei sind die Positionen in der Umgebung bevorzugt manuell befahrene oder manuell beparkte Positionen, also Positionen, welche durch das Kraftfahrzeug in einem manuellen Betriebsmodus eingenommen wurden. Dies ist für die weiteren genannten Verfahrensschritte besonders vorteilhaft.

Als weiterer Verfahrensschritt erfolgt nämlich ein Trainieren eines neuronalen Netzes für ein Erkennen von befahrbaren und/oder beparkbaren Bereichen in der erfassten Umgebung oder in einer erfassten Umgebung anhand der Umgebungsdaten in der fahrzeugexternen Recheneinrichtung. Dies erfolgt hier mit einem überwachten Lernprozess, welcher auf den Umgebungsdaten und den zugeordneten Positionsdaten basiert. Die zugeordneten Positionsdaten können somit in dem überwachten Lernprozess als Annotation der Umgebungsdaten dienen und ein von dem neuronalen Netz zu erlernendes Ergebnis repräsentieren. Daher können die zugeordneten Positionsdaten von einer Lehrinstanz des neuronalen Netzes bei dem Trainieren für ein Korrigieren einer Klassifikation jeweiliger Bereiche in der erfassten Umgebung als befahrbar und/oder beparkbar genutzt werden. Durch die Lehrinstanz wird somit über die Positionsdaten die Kenntnis des Fahrers über befahrbare und beparkbare Bereiche in der Umgebung in Form der jeweiligen Positionsdaten genutzt. Die von dem oder den Kraftfahrzeugen übermittelten Umgebungsdaten und Positionsdaten werden also zum Trainieren eines neuronalen Netzwerkes, welches beispielsweise in einer sogenannten Cloud als fahrzeugexterne Recheneinrichtung implementiert sein kann, verwendet. Da Personen, welche das Kraftfahrzeug lenken, wissen, wo, also in welchen Bereichen gefahren und/oder geparkt werden darf, wird das neuronale Netz indirekt durch die lenkenden Personen dahingehend trainiert zu unterscheiden, welche Bereiche befahrbar sind und welche Bereiche nicht befahren werden dürfen.

Als weiterer Verfahrensschritt erfolgt sodann ein Rückübermitteln einer Profilinformation, welche das trainierte neuronale Netz oder Netzwerk charakterisiert, von der fahrzeugexternen Recheneinrichtung an das eine Kraftfahrzeug, mit dessen Umgebungserfassungseinrichtung die Umgebung erfasst wurde, oder aber an ein anderes Kraftfahrzeug, dessen von einer entsprechenden anderen Umgebungs-Erfassungseinrichtung erzeugte Umgebungsdaten bevorzugt noch nicht für das Trainieren des neuronalen Netzes genutzt wurde. Die Profilinformation kann beispielsweise eine Information über neuronale Gewichte und/oder Verknüpfungsstärken des neuronalen Netzes umfassen. Schließlich erfolgt als weiterer Verfahrensschritt ein Konfigurieren eines lokalen neuronalen Netzes einer Parkassistenzeinrichtung des jeweiligen Kraftfahrzeugs, also eines neuronalen Netzes in der Parkassistenzeinrichtung des einen oder des anderen Kraftfahrzeugs, mit der rückübermittelten Profilinformation.

Das lokale neuronale Netz kann somit insbesondere eine Kopie des neuronalen Netzes der fahrzeugexternen Recheneinrichtung sein. Das lokale neuronale Netz dient dabei zum Erkennen von befahrbaren oder beparkbaren Bereichen in einer durch eine Umgebungs-Erfassungseinrichtung des jeweiligen Kraftfahrzeugs erfassten Umgebung. Somit kann das lokale neuronale Netz befahrbare oder beparkbare Bereiche beziehungsweise entsprechend nicht befahrbare und nicht beparkbare Bereiche in der Umgebung in der gleichen Qualität erkennen wie das trainierte neuronale Netz der fahrzeugexternen Recheneinrichtung. Entsprechend kann nun die Parkassistenzeinrichtung des jeweiligen Kraftfahrzeugs befahrbare und/oder beparkbare Bereiche mit dem lokalen neuronalen Netz erkennen und so beispielsweise durch Hinweise in einem teilautomatisierten Parkbetrieb des Kraftfahrzeugs und/oder durch entsprechende Fahrmanöver in einem teil- oder vollautomatisierten Parkbetrieb in der Parkanlage den Fahrer unterstützen beziehungsweise fahren oder parken. Letzteres ist auch unter dem Begriff "Valet Parking" bekannt.

Das hat einerseits den Vorteil, dass das Trainieren des neuronalen Netzes, welches sehr rechenaufwändig ist, nicht lokal in dem Kraftfahrzeug erfolgen muss, sondern zentral in der fahrzeugexternen Recheneinrichtung mit vergleichsweise großer Rechenkapazität durchgeführt werden kann. Des Weiteren kann über das beschriebene Verfahren das neuronale Netz in der fahrzeugexternen Recheneinrichtung auch besonders gut trainiert werden, da die Umgebungsdaten und Positionsdaten einer Vielzahl von unterschiedlichen Kraftfahrzeugen in der Parkanlage an die fahrzeugexterne Recheneinrichtung übermittelt werden können. Mit der vergrößerten Datenbasis lässt sich das neuronale Netz zu einer besonders großen Leistungsfähigkeit trainieren. Dabei können die unterschiedlichen Kraftfahrzeuge auch technologisch unterschiedliche Umgebungs-Erfassungseinrichtungen aufweisen, sodass das neuronale Netz nochmals flexibler wird.

Des Weiteren ergibt sich so der Vorteil, dass in der Parkanlage nicht zwingend eine Datenverbindung zu der fahrzeugexternen Recheneinrichtung bestehen muss. So können nämlich einerseits die Umgebungsdaten und zugeordnete Positionsdaten nach dem Erfassen, also nach einem Befahren oder Parken in der Parkanlage, beispielsweise bei oder nach einem Verlassen der Parkanlage, beispielsweise einer Tiefgarage, an die fahrzeugexterne Recheneinrichtung übermittelt werden. Es kann beispielsweise auch vorgesehen sein, dass das Übermitteln zu einem Zeitpunkt erfolgt, an welchem eine Breitbandverbindung mit einer vorgegebenen Mindestbandbreite zu der fahrzeugexternen Recheneinrichtung hergestellt werden kann. Dies kann beispielsweise der Zeitpunkt sein, an welchem ein Kraftfahrzeug wieder in eine Reichweite eines heimischen drahtlosen lokalen Netzwerkes gelangt.

Da nun ebenfalls das Rückübermitteln nicht in der Parkanlage, sondern bereits vor einem Einfahren in die Parkanlage erfolgen kann, beispielsweise wenn sich, wie weiter unter noch ausgeführt, das Kraftfahrzeug, dessen lokales neuronales Netz konfiguriert werden soll, einer vorgegebenen globalen Position, das heißt der Parkanlage, nähert, vorgenommen werden kann, ist in der Parkanlage nicht zwingend eine Datenverbindung zu der fahrzeugexternen Recheneinrichtung erforderlich. Damit kann das lokale neuronale Netz für die bestmögliche Leistung in der Parkanlage konfiguriert werden, benötigt aber in der Parkanlage, also bei einem Befahren der Parkanlage keinerlei Datenverbindung mehr zu der fahrzeugexternen Recheneinrichtung, kann aber dennoch von den gesammelten Daten profitieren. Bei dem Parken selber durch die Parkassistenzeinrichtung des Kraftfahrzeugs ist somit keine fahrzeugexterne Infrastruktur erforderlich, sodass gerade auch in Tiefgaragen oder Parkhäusern, in denen im Allgemeinen ein schlechter Mobilfunkempfang möglich ist, das Kraftfahrzeug beziehungsweise die jeweilige Parkassistenzeinrichtung von dem in der fahrzeugexternen Recheneinrichtung gespeicherten Wissen profitieren kann.

Es ist hier auch möglich, dass in der fahrzeugexternen Recheneinrichtung mehrere unterschiedliche neuronale Netze, welche jeweiligen globalen Positionen, also jeweiligen Parkanlagen zugeordnet sind, trainiert werden. Bei einem Annähern eines Kraftfahrzeugs an eine jeweilige solche globale Position kann sodann die Parkassistenzeinrichtung passend zu der jeweiligen Parkanlage konfiguriert werden.

In einer vorteilhaften Ausführungsform ist dabei vorgesehen, dass die Umgebungs-Erfassungseinrichtung des einen Kraftfahrzeugs eine Kameraeinheit und/oder eine Radareinheit und/oder eine Lidareinheit und/oder eine Ultraschalleinheit als Sensoreinheit zum Erfassen der Umgebung aufweist. Insbesondere weist dabei die Umgebungs-Erfassungseinrichtung des anderen Kraftfahrzeugs nicht alle Arten von (dann mehreren) unterschiedlichen Sensoreinheiten auf, welche das eine Kraftfahrzeug aufweist. Bevorzugt weist das andere Kraftfahrzeug dabei nur genau eine Art der Sensoreinheit auf, welche das eine Kraftfahrzeug auch aufweist. Es kann somit vorgesehen sein, dass beispielsweise das eine Kraftfahrzeug eine Kameraeinheit als Sensoreinheit aufweist und das andere Kraftfahrzeug ebenfalls eine Kameraeinheit als Sensoreinheit aufweist. Ebenso kann jedoch vorgesehen sein, dass das eine Kraftfahrzeug eine Kameraeinheit und eine Radar- oder Lidareinheit aufweist, das andere Kraftfahrzeug hingegen weiterhin nur eine Kameraeinheit oder mehrere Kameraeinheiten aufweist.

Die genannten Sensoreinheiten haben einerseits den Vorteil, dass sich mit ihnen die Umgebung besonders genau erfassen lässt und sie in vielen Kraftfahrzeugen bereits vorhanden sind. Weist das eine Kraftfahrzeug mehrere unterschiedliche Sensoreinheiten auf, so kann überdies das neuronale Netz in der fahrzeugexternen Recheneinrichtung besonders gut und flexibel trainiert werden, es können nämlich aufgrund der assoziativen Eigenschaften neuronaler Netze auch lokale neuronale Netze eines Kraftfahrzeugs mit jeweils nur einer Art von Sensoreinheiten, beispielsweise nur einer Kameraeinheit oder nur einer Lidareinheit mit der Profilinformation des trainierten neuronalen Netzes konfiguriert werden und dennoch gute Ergebnisse bei dem Erkennen von befahrbaren und/oder beparkbaren Bereichen erreicht werden. Es ist somit in der fahrzeugexternen Recheneinrichtung fahrzeug- beziehungsweise sensor-unabhängig nur ein einziges neuronales Netz für eine Parkanlage erforderlich.

In einer weiteren vorteilhaften Ausführungsform ist vorgesehen, dass nur Umgebungsdaten übermittelt werden, welche die aus einer Schlüsselposition erfasste Umgebung repräsentieren. Die aus einer Schlüsselposition erfasste Umgebung wird hier oft auch als sogenannte "Key Pose" bezeichnet. Aus der Schlüsselposition werden dabei Referenzmerkmale der Umgebung erfasst, welche zur Lokalisierung des Kraftfahrzeugs in der Umgebung, also allgemein einer Orientierung im Sinne einer Navigation in der Umgebung, für eine Vielzahl von Positionen des Kraftfahrzeugs geeignet sind. Die Vielzahl von Positionen kann dabei insbesondere in einem Bereich vorgegebener Größe, beispielsweise mit einer maximalen Erstreckung von weniger als 2, weniger als 3, weniger als 4 oder weniger als 5 Meter liegen. Bevorzugt weist der Bereich auch eine minimale Erstreckung von mehr als 1 Meter auf.

Das hat den Vorteil, dass das Trainieren des neuronalen Netzes anhand der Referenzmerkmale erfolgen kann, sodass das neuronale Netz mit den Umgebungsdaten, welche die aus der Schlüsselposition erfasste Umgebung repräsentieren, besonders viele Bereiche der Umgebung als befahrbar und/oder beparkbar oder eben als nicht befahrbar und/oder nicht beparkbar erkennen kann. Beispielsweise kann solch eine Schlüsselposition sich bei dem Fahren des Kraftfahrzeugs in der Parkanlage alle drei bis fünf Meter ergeben. Die aus den Schlüsselpositionen erfasste Umgebung repräsentierenden Umgebungsdaten repräsentieren somit die gesamte Umgebung bereits hinreichend genau, damit das neuronale Netz zuverlässig trainiert werden kann.

Das hat den Vorteil, dass weniger Umgebungsdaten übermittelt werden müssen, damit das neuronale Netz in der fahrzeugexternen Recheneinrichtung trainiert werden kann, sodass Anforderungen an die Infrastruktur, beispielsweise an eine Bandbreite einer verfügbaren Datenverbindung von dem Kraftfahrzeug zur fahrzeugexternen Recheneinrichtung, vermindert sind.

In einer weiteren vorteilhaften Ausführungsform ist vorgesehen, dass die übermittelten Umgebungsdaten mit einer globalen Position, insbesondere mit einer durch ein globales Positionserfassungssystem, beispielsweise durch das Global Positioning System (GPS), ermittelten globalen Position, verknüpft werden. Bevorzugt wurde die globale Position dabei vor und/oder nach dem Erfassen der Umgebung, beispielsweise vor dem Einfahren in die Parkanlage und/oder nach dem Ausfahren aus der Parkanlage ermittelt. Auch das neuronale Netz in der fahrzeugexternen Recheneinrichtung und/oder die Profilinformation wird dabei mit der globalen Position verknüpft.

Das liefert den bereits oben erwähnten Vorteil, dass das Kraftfahrzeug oder dessen Parkassistenzeinrichtung jeweils an die vorliegende Parkanlage angepasst werden kann, um in dieser mit einem auf die jeweilige Parkanlage optimierten neuronalen Netz befahrbare beziehungsweise beparkbare Bereiche zu erkennen.

Entsprechend kann hier vorgesehen sein, dass das Konfigurieren und insbesondere auch das Rückübermitteln nur erfolgt, wenn sich das jeweilige Kraftfahrzeug innerhalb eines vorgegebenen Umgebungsbereiches um die globale Position aufhält. Beispielsweise kann das Konfigurieren und/oder das Rückübermitteln nur dann erfolgen, wenn das Kraftfahrzeug von der globalen Position, welche mit dem neuronalen Netz beziehungsweise der Profilinformation verknüpft ist, weniger als eine vorgegebene Entfernung, beispielsweise 100 Meter, entfernt ist.

In einer weiteren vorteilhaften Ausführungsform ist vorgesehen, dass das Erfassen und das Übermitteln von mehreren unterschiedlichen Kraftfahrzeugen und/oder mehrfach von dem einen Kraftfahrzeug bewirkt wird. Entsprechend wird das Trainieren hier mehrfach mit den jeweiligen Umgebungsdaten, das heißt den jeweils übermittelten Umgebungsdaten, und den entsprechenden Positionsdaten durchgeführt.

Das hat den Vorteil, dass das neuronale Netz mit besonders vielen Umgebungs- und Positionsdaten trainiert wird und somit besonders leistungsfähig wird.

In einer weiteren vorteilhaften Ausführungsform ist vorgesehen, dass die neuronalen Netze, also das neuronale Netz in der fahrzeugexternen Recheneinrichtung und das lokale neuronale Netz, jeweils ein tiefes neuronales Netz mit mehreren verborgenen Schichten, sogenannten Hidden Layers, umfassen oder sind und/oder die neuronalen Netze jeweils ein faltendes neuronales Netz, ein sogenanntes Convolutional Neural Network, umfassen oder sind.

Das hat den Vorteil, dass das Erkennen der befahrbaren und/oder beparkbaren Bereiche in der erfassten Umgebung besonders zuverlässig erfolgt, da die genannten neuronalen Netze hier besonders geeignet sind. Da gerade bei dem Verwenden von Umgebungsdaten unterschiedlicher Kraftfahrzeuge eine große Datenbasis vorhanden ist, können diese neuronalen Netze auch in der jeweils erforderlichen Genauigkeit trainiert werden.

Ein anderer Aspekt der Erfindung betrifft eine Parkassistenzeinrichtung für ein Kraftfahrzeug, mit einer Umgebungs-Erfassungseinrichtung zum Erfassen einer Umgebung des Kraftfahrzeugs in einer Parkanlage für Kraftfahrzeuge. Die Parkassistenzeinrichtung weist dabei auch eine Sendeeinrichtung zum Übermitteln von durch die Umgebungs-Erfassungseinrichtung erzeugten Umgebungsdaten, welche die erfasste Umgebung repräsentieren, und von den jeweiligen Umgebungsdaten zugeordneten Positionsdaten, welche zumindest eine von dem einen Kraftfahrzeug befahrene und/oder beparkte Position in der Umgebung repräsentieren, an eine fahrzeugexterne Recheneinrichtung auf. Des Weiteren weist die Parkassistenzeinrichtung auch eine Empfangseinrichtung zum Empfangen einer Profilinformation, welche ein neuronales Netzwerk für ein Erkennen von befahrbaren und/oder beparkbaren Bereichen in der erfassten Umgebung anhand der Umgebungsdaten charakterisiert, von der fahrzeugexternen Recheneinrichtung auf. Dabei ist die Parkassistenzeinrichtung ausgebildet, ein lokales neuronales Netz der Parkassistenzeinrichtung, welches zum Erkennen von befahrbaren und/oder beparkbaren Bereichen in der durch die Umgebungs-Erfassungseinrichtung des Kraftfahrzeugs erfassten Umgebung dient, mit der rückübermittelten Profilinformation zu konfigurieren.

Vorteile und vorteilhafte Ausführungsformen der Parkassistenzeinrichtung entsprechen hier Vorteilen und vorteilhaften Ausführungsformen des beschriebenen Verfahrens.

Die Erfindung betrifft auch ein Kraftfahrzeug mit einer solchen Parkassistenzeinrichtung.

Ein weiterer Aspekt der Erfindung betrifft ein Parkassistenzsystem für zumindest ein Kraftfahrzeug, mit zumindest einer Parkassistenzeinrichtung oder mit zumindest einem Kraftfahrzeug mit solch einer Parkassistenzeinrichtung, sowie mit einer fahrzeugexternen Recheneinrichtung. Dabei weist die fahrzeugexterne Recheneinrichtung eine Empfangseinrichtung zum Empfangen von den von der Sendeeinrichtung der Parkassistenzeinrichtung übermittelten Umgebungsdaten und Positionsdaten auf. Die fahrzeugexterne Recheneinrichtung ist auch ausgebildet, ein neuronales Netz für ein Erkennen von befahrbaren und/oder beparkbaren Bereichen in der erfassten Umgebung anhand der Umgebungsdaten mit einem überwachten Lernprozess zu trainieren, wobei der überwachte Lernprozess auf den Umgebungsdaten und den zugeordneten Positionsdaten basiert. Schließlich weist die fahrzeugexterne Recheneinrichtung eine Sendeeinrichtung zum Übermitteln der das neuronale Netzwerk charakterisierenden Profilinformation auf.

Vorteile und vorteilhafte Ausführungsform des Parkassistenzsystems entsprechen hier Vorteilen und vorteilhaften Ausführungsformen des beschriebenen Verfahrens.

Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen verwendbar, ohne den Rahmen der Erfindung zu verlassen, der durch die Ansprüche festgelegt ist.

Ausführungsbeispiele der Erfindung werden nachfolgend anhand schematischer Zeichnungen näher erläutert.

In der einzigen Figur ist dabei ein Kraftfahrzeug 1 in unterschiedlichen Situationen A, B, C dargestellt, um eine beispielhafte Ausführungsform eines Verfahrens zum Betreiben eines Parkassistenzsystems 2 zu erläutern. Das Kraftfahrzeug 1 weist dabei in der jeweiligen Situation A, B, C eine Parkassistenzeinrichtung 3 mit einer Umgebungs-Erfassungseinrichtung 4, einer Sende- und Empfangseinrichtung 5 sowie einer Positionserfassungseinrichtung 6 und einer Recheneinrichtung 7 mit einem lokalen neuronalen Netz 8 auf. Die Umgebungs-Erfassungseinrichtung 4 dient dabei dem Erfassen einer Umgebung 9 des Kraftfahrzeugs 1 in einer Parkanlage 10 für Kraftfahrzeuge. Die Sende- und Empfangseinrichtung 5 dient dabei zum Übermitteln von durch die Umgebungs-Erfassungseinrichtung 4 erzeugten Umgebungsdaten, welche die erfasste Umgebung 9 repräsentieren, sowie dem Übermitteln von den jeweiligen Umgebungsdaten zugeordneten Positionsdaten, welche zumindest eine von dem Kraftfahrzeug befahrene oder beparkte Position (oder Positionsbereich) in der Umgebung 9 repräsentieren, an eine fahrzeugexterne Recheneinrichtung 11, welche vorliegend als Cloud ausgeführt ist. Andererseits dient die Sende- und Empfangseinrichtung 5 zum Empfangen einer Profilinformation, welche ein neuronales Netzwerk 12 für ein Erkennen von befahrbaren oder beparkbaren Bereichen in der erfassten Umgebung 9 anhand der Umgebungsdaten charakterisiert, von der fahrzeugexternen Recheneinrichtung 11. Das Übermitteln beziehungsweise Senden und Empfangen erfolgt dabei jeweils über eine drahtlose Datenverbindung 13.

Die Parkassistenzeinrichtung 3 ist dabei ausgebildet, ein lokales neuronales Netz 8 der Parkassistenzeinrichtung 3, welches zum Erkennen von befahrbaren oder beparkbaren Bereichen in der durch die Umgebungs-Erfassungseinrichtung 4 des Kraftfahrzeugs 1 erfassten Umgebung 9 dient, mit der von der fahrzeugexternen Recheneinrichtung 11 rückübermittelten Profilinformationen zu konfigurieren. Die fahrzeugexterne Recheneinrichtung 11 weist dabei eine nicht dargestellte Sende- und Empfangseinrichtung auf, welche einerseits dem Empfangen von den von der Sende- und Empfangseinrichtung 5 der Parkassistenzeinrichtung 3 übermittelten Umgebungsdaten und Positionsdaten dient und andererseits dem Rückübermitteln der besagten Profilinformation von der fahrzeugexternen Recheneinrichtung 11 zu der Parkassistenzeinrichtung 3. Die fahrzeugexterne Recheneinrichtung 11 ist dabei ausgebildet, das neuronale Netz 12 für ein Erkennen von befahrbaren oder beparkbaren Bereichen in der erfassten Umgebung 9 anhand der Umgebungsdaten mit einem überwachten Lernprozess, welcher auf den Umgebungsdaten und den zugeordneten Positionsdaten basiert, zu trainieren.

In der ersten Position A des Kraftfahrzeugs 1, welche sich innerhalb der Parkanlage 10 befindet, erfolgt nun ein Erfassen der Umgebung 9 durch die Umgebungs-Erfassungseinrichtung 4 des Kraftfahrzeugs 1. Da im gezeigten Beispiel in der Parkanlage 10 der Aufbau der Datenverbindung 13 nicht möglich ist, also keine Datenverbindung 13 zu der fahrzeugexternen Recheneinrichtung 11 besteht, werden die entsprechenden von der Umgebungs-Erfassungseinrichtung 4 erzeugten Umgebungsdaten, welche die erfasste Umgebung 9 repräsentieren, in der Recheneinrichtung 7 zwischengespeichert. Die Umgebungsdaten können dabei bevorzugt nur für sogenannte Key Poses abgespeichert werden, das heißt wenn sich das Kraftfahrzeug 1 in einer Schlüsselposition befindet, aus welcher Referenzmerkmale der Umgebung erfasst werden, welche zur Lokalisierung des Kraftfahrzeugs 1 in der Umgebung 9 für eine Vielzahl von Positionen des Kraftfahrzeugs 1 geeignet sind. Dies spart in erheblichem Maße Rechenplatz in der Recheneinrichtung 7.

Im gezeigten Beispiel wird nun in der Position B, wenn das Kraftfahrzeug 1 die Parkanlage 10 verlässt oder verlassen hat, ein Übermitteln der erzeugten Umgebungsdaten und von den jeweiligen Umgebungsdaten zugeordneten Positionsdaten, welche die von dem Kraftfahrzeug 1 befahrenen und/oder beparkten Positionen in der Umgebung 9 repräsentieren, über die Datenverbindung 13 an die fahrzeugexterne Recheneinrichtung 11 bewirkt. Im vorliegenden Beispiel wird mit den Umgebungsdaten auch eine globale Position 15, welche durch das globale Positionserfassungssystem 14 mit der Positionserfassungseinrichtung 6 ermittelt wird, übermittelt. Diese globale Position 15 wird nun in der fahrzeugexternen Recheneinrichtung 11 auch mit dem neuronalen Netz 12 beziehungsweise der später zu übermittelnden Profilinformation verknüpft oder assoziiert.

In der fahrzeugexternen Recheneinrichtung 11 erfolgt nun das Trainieren des neuronalen Netzes 12 für das Erkennen von befahrbaren und beparkbaren Bereichen in der erfassten Umgebung 9 anhand der Umgebungsdaten als solche. Dies erfolgt mit einem überwachten Lernprozess, welcher auf den Umgebungsdaten und den zugeordneten Positionsdaten basiert.

Nähert sich nun das Kraftfahrzeug 1, bei welchem es sich um das eine (gleiche) Kraftfahrzeug, von dem die Umgebungsdaten stammen, oder aber auch um ein anderes Kraftfahrzeug handeln kann, der mit dem lokalen neuronalen Netz gekoppelten oder verknüpften globalen Position 15 bis auf einen vorgegebenen Abstand, beispielsweise 100 Meter, so erfolgt in dem gezeigten Beispiel ein Rückübermitteln der Profilinformation, welche das für die Parkanlage 10 trainierte neuronale Netz 12 der fahrzeugexternen Recheneinrichtung 11 charakterisiert, von der fahrzeugexternen Recheneinrichtung 11 über die Datenverbindung 13 an das Kraftfahrzeug 1. In diesem erfolgt nun ein Konfigurieren des lokalen neuronalen Netzes 8 mit der rückübermittelten Profilinformation, sodass das lokale neuronale Netz 8 in idealer Weise zum Erkennen von befahrbaren und beparkbaren Bereichen in der Umgebung 9 spezifisch an die vorliegende Parkanlage 10 angepasst ist.

Somit kann auf effektive und effiziente Weise das Kraftfahrzeug 1 in der Position C auf das bevorstehende Parken in der Parkanlage 10 angepasst werden. Innerhalb der Parkanlage 10 kann das Kraftfahrzeug 1 dabei insbesondere vollständig autark, also von der Datenverbindung 13 unabhängig, agieren, beispielsweise einen selbständigen Parkvorgang durchführen.

## Patentansprüche

1. Verfahren zum Betreiben eines Parkassistenzsystems (2) für zumindest ein Kraftfahrzeug (1), mit den Verfahrensschritten:
a) Erfassen einer Umgebung (9) des Kraftfahrzeugs (1) in einer Parkanlage (10) für Kraftfahrzeuge durch eine Umgebungs-Erfassungseinrichtung (4) des einen Kraftfahrzeugs (1);
b) Übermitteln von durch die Umgebungs-Erfassungseinrichtung (4) erzeugten Umgebungsdaten, welche die erfasste Umgebung (9) repräsentieren, und von den jeweiligen Umgebungsdaten zugeordneten Positionsdaten, welche zumindest eine von dem einen Kraftfahrzeug (1) befahrene oder beparkte Position in der Umgebung (9) repräsentieren, an eine fahrzeugexterne Recheneinrichtung (11);
c) Trainieren eines neuronalen Netzes (12) für ein Erkennen von befahrbaren oder beparkbaren Bereichen in der erfassten Umgebung (9) anhand der Umgebungsdaten mit einem überwachten Lernprozess, welcher auf den Umgebungsdaten und den zugeordneten Positionsdaten basiert, in der fahrzeugexternen Recheneinrichtung (11);
d) Rückübermitteln einer Profilinformation, welche das trainierte neuronale Netz (12) charakterisiert, von der fahrzeugexternen Recheneinrichtung (11) an das eine Kraftfahrzeug (1) oder an ein anderes Kraftfahrzeug (1);
e) Konfigurieren eines lokalen neuronalen Netzes (8) einer Parkassistenzeinrichtung (3) des jeweiligen Kraftfahrzeugs (1), welches zum Erkennen von befahrbaren oder beparkbaren Bereichen in einer durch eine Umgebungs-Erfassungseinrichtung (4) des jeweiligen Kraftfahrzeugs (1) erfassten Umgebung (9) dient, mit der rückübermittelten Profilinformation.

2. Verfahren nach Anspruch 1, wobei die Umgebungs-Erfassungseinrichtung (4) des einen Kraftfahrzeugs (1) eine Kameraeinheit und/oder eine Radareinheit und/oder eine Lidareinheit und/oder eine Ultraschalleinheit als Sensoreinheit aufweist, und insbesondere die Umgebungs-Erfassungseinrichtung (4) des anderen Kraftfahrzeugs (1) nicht alle Arten von Sensoreinheiten aufweist, welche das eine Kraftfahrzeug (1) aufweist, bevorzugt nur genau eine Art der Sensoreinheit aufweist, welche das eine Kraftfahrzeug (1) aufweist.

3. Verfahren nach einem der vorhergehenden Ansprüche, wobei nur Umgebungsdaten übermittelt werden, welche die aus einer Schlüsselposition erfasste Umgebung (9) repräsentieren, wobei aus der Schlüsselposition Referenzmerkmale der Umgebung (9) erfasst werden, welche zur Lokalisierung des Kraftfahrzeugs (1) in der Umgebung (9) für eine Vielzahl von Positionen des Kraftfahrzeugs (1) geeignet sind.

4. Verfahren nach einem der vorhergehenden Ansprüche, wobei die übermittelten Umgebungsdaten mit einer globalen Position (15), insbesondere mit einer durch ein globales Positionserfassungssystem (14) ermittelten globalen Position (15), verknüpft werden, welche bevorzugt vor dem Erfassen der Umgebung (9) ermittelt wurde, und auch das neuronale Netz (12) in der fahrzeugexternen Recheneinrichtung (11) und/oder die Profilinformation mit der globalen Position (15) verknüpft wird.

5. Verfahren nach Anspruch 4, wobei das Konfigurieren gemäß Verfahrensschritt e) und insbesondere auch das Rückübermitteln gemäß Verfahrensschritt d) nur erfolgt, wenn sich das jeweilige Kraftfahrzeug (1) innerhalb eines vorgegebenen Umgebungsbereiches um die globale Position (15) aufhält.

6. Verfahren nach einem der vorhergehenden Ansprüche, wobei das Erfassen gemäß Verfahrensschritt a) und das Übermitteln gemäß Verfahrensschritt b) von mehreren unterschiedlichen Kraftfahrzeugen und/oder mehrfach von dem einen Kraftfahrzeug (1) bewirkt wird und das Trainieren gemäß Verfahrensschritt c) mehrfach mit den jeweiligen Umgebungsdaten und Positionsdaten durchgeführt wird.

7. Verfahren nach einem der vorhergehenden Ansprüche, wobei die neuronalen Netze (8, 12) jeweils ein tiefes neuronales Netz mit mehreren verborgenen Schichten umfassen und/oder die neuronalen Netze (8, 12) jeweils ein faltendes neuronales Netz umfasst.

8. Parkassistenzeinrichtung (3) für ein Kraftfahrzeug (1), mit
- einer Umgebungs-Erfassungseinrichtung (4), die zum Erfassen einer Umgebung (9) des Kraftfahrzeugs (1) in einer Parkanlage (10) für Kraftfahrzeuge ausgebildet ist;
- einer Sendeeinrichtung (5), die zum Übermitteln von durch die Umgebungs-Erfassungseinrichtung (4) erzeugten Umgebungsdaten ausgebildet ist, welche die erfasste Umgebung (9) repräsentieren, und von den jeweiligen Umgebungsdaten zugeordneten Positionsdaten, welche zumindest eine von dem einen Kraftfahrzeug (1) befahrene oder beparkte Position in der Umgebung (9) repräsentieren, an eine fahrzeugexterne Recheneinrichtung (11); **gekennzeichnet durch**
- eine Empfangseinrichtung (5), die zum Empfangen einer Profilinformation ausgebildet ist, welche ein neuronales Netzwerk (12) für ein Erkennen von befahrbaren oder beparkbaren Bereichen in der erfassten Umgebung (9) anhand der Umgebungsdaten charakterisiert, von der fahrzeugexternen Recheneinrichtung (11); sowie **dadurch**, dass
- die Parkassistenzeinrichtung (3) ausgebildet ist, ein lokales neuronales Netz (8) der Parkassistenzeinrichtung (3), welches zum Erkennen von befahrbaren oder beparkbaren Bereichen in der **durch** die Umgebungs-Erfassungseinrichtung (4) des Kraftfahrzeugs (1) erfassten Umgebung (9) dient, mit der rückübermittelten Profilinformation zu konfigurieren.

9. Kraftfahrzeug (1) mit einer Parkassistenzeinrichtung (3) nach Anspruch 8.

10. Parkassistenzsystem (2) für zumindest ein Kraftfahrzeug (1), mit zumindest einer Parkassistenzeinrichtung (3) nach Anspruch 8 oder zumindest einem Kraftfahrzeug (1) nach Anspruch 9 und mit einer fahrzeugexternen Recheneinrichtung (11), wobei die fahrzeugexterne Recheneinrichtung (11)
- eine Empfangseinrichtung zum Empfangen von den von der Sendeeinrichtung (5) der Parkassistenzeinrichtung (3) übermittelten Umgebungsdaten und Positionsdaten aufweist;
- ausgebildet ist, ein neuronales Netz (12) für ein Erkennen von befahrbaren oder beparkbaren Bereichen in der erfassten Umgebung (9) anhand der Umgebungsdaten mit einem überwachten Lernprozess, welcher auf den Umgebungsdaten und den zugeordneten Positionsdaten basiert, zu trainieren; und ferner
- eine Sendeeinrichtung zum Rückübermitteln der Profilinformation aufweist.

## Claims

1. Method for operating a parking assistance system (2) for at least one motor vehicle (1), comprising the following method steps:
a) detecting surroundings (9) of the motor vehicle (1) in a parking facility (10) for motor vehicles by way of a surroundings detection device (4) of the one motor vehicle (1);
b) transmitting surroundings data, generated by the surroundings detection device (4) and representing the detected surroundings (9), and position data, associated with the respective surroundings data and representing at least one position travelled or parked in by the one motor vehicle (1) in the surroundings (9), to a computing device (11) external to the vehicle;
c) training a neural network (12) to recognize areas able to be travelled or parked in in the detected surroundings (9) on the basis of the surroundings data using a supervised learning process that is based on the surroundings data and the associated position data, in the computing device (11) external to the vehicle;
d) transmitting back profile information that characterizes the trained neural network (12) from the computing device (11) external to the vehicle to the one motor vehicle (1) or to another motor vehicle (1);
e) configuring a local neural network (8) of a parking assistance device (3) of the respective motor vehicle (1), which local neural network serves to recognize areas able to be travelled or parked in in surroundings (9) detected by a surroundings detection device (4) of the respective motor vehicle (1), with the profile information that is transmitted back.

2. Method according to Claim 1, wherein the surroundings detection device (4) of the one motor vehicle (1) has a camera unit and/or a radar unit and/or a lidar unit and/or an ultrasound unit as sensor unit, and in particular the surroundings detection device (4) of the other motor vehicle (1) does not have all the types of sensor unit that the one motor vehicle (1) has, preferably has only exactly one type of sensor unit that the one motor vehicle (1) has.

3. Method according to either of the preceding claims, wherein only surroundings data that represent the surroundings (9) detected from a key position are transmitted, wherein reference features of the surroundings (9) are detected from the key position, the reference features being suitable for locating the motor vehicle (1) in the surroundings (9) for a multiplicity of positions of the motor vehicle (1).

4. Method according to one of the preceding claims, wherein the transmitted surroundings data are linked to a global position (15), in particular to a global position (15) determined by a global position detection system (14), which position was preferably determined before the surroundings (9) were detected, and the neural network (12) in the computing device (11) external to the vehicle and/or the profile information is also linked to the global position (15).

5. Method according to Claim 4, wherein the configuration according to method step e), and in particular also the transmission back according to method step d), takes place only when the respective motor vehicle (1) stays around the global position (15) within a predefined area of the surroundings.

6. Method according to one of the preceding claims, wherein the detection according to method step a) and the transmission according to method step b) is performed by multiple different motor vehicles and/or multiple times by the one motor vehicle (1) and the training according to method step c) is performed multiple times with the respective surroundings data and position data.

7. Method according to one of the preceding claims, wherein the neural networks (8, 12) each comprise a deep neural network with multiple hidden layers and/or the neural networks (8, 12) each comprise a convolutional neural network.

8. Parking assistance device (3) for a motor vehicle (1), having
- a surroundings detection device (4) that is designed to detect surroundings (9) of the motor vehicle (1) in a parking facility (10) for motor vehicles;
- a transmission device (5) that is designed to transmit surroundings data, generated by the surroundings detection device (4) and representing the detected surroundings (9), and position data, associated with the respective surroundings data and representing at least one position travelled or parked in by the motor vehicle (1) in the surroundings (9), to a computing device (11) external to the vehicle;
**characterized by**
- a reception device (5) that is designed to receive profile information that characterizes a neural network (12) for recognizing areas able to be travelled or parked in in the detected surroundings (9) on the basis of the surroundings data, from the computing device (11) external to the vehicle; and in that
- the parking assistance device (3) is designed to configure a local neural network (8) of the parking assistance device (3), which local neural network is used to recognize areas able to be travelled or parked in in the surroundings (9) detected by the surroundings detection device (4) of the motor vehicle (1), with the profile information that is transmitted back.

9. Motor vehicle (1) having a parking assistance device (3) according to Claim 8.

10. Parking assistance system (2) for at least one motor vehicle (1), having at least one parking assistance device (3) according to Claim 8 or at least one motor vehicle (1) according to Claim 9 and having a computing device (11) external to the vehicle, wherein the computing device (11) external to the vehicle
- has a reception device for receiving the surroundings data and position data transmitted by the transmission device (5) of the parking assistance device (3);
- is designed to train a neural network (12) to recognize areas able to be travelled or parked in in the detected surroundings (9) on the basis of the surroundings data using a supervised learning process that is based on the surroundings data and the associated position data; and also
- has a transmission device for transmitting back the profile information.

## Revendications

1. Procédé pour faire fonctionner un système d'assistance au stationnement (2) pour au moins un véhicule automobile (1), comprenant les étapes suivantes :
a) détection d'un environnement (9) du véhicule automobile (1) dans un parking (10) pour véhicules automobiles par un dispositif de détection d'environnement (4) dudit véhicule automobile (1) ;
b) communication de données d'environnement générées par le dispositif de détection d'environnement (4), lesquelles représentent l'environnement (9) détecté, et de données de position associées aux données d'environnement respectives, lesquelles représentent au moins une position dans l'environnement (9) sur laquelle le véhicule automobile (1) a roulé ou est stationné, à un dispositif de calcul (11) externe au véhicule ;
c) entraînement d'un réseau neuronal (12) pour une reconnaissance des zones aptes au roulage ou aptes au stationnement dans l'environnement (9) détecté à l'aide des données d'environnement avec un processus d'apprentissage surveillé, lequel se base sur les données d'environnement et les données de position associées, dans le dispositif de calcul (11) externe au véhicule ;
d) renvoi d'une information de profil, laquelle caractérise le réseau neuronal (12) entraîné, par le dispositif de calcul (11) externe au véhicule audit véhicule automobile (1) ou un autre véhicule automobile (1) ;
e) configuration d'un réseau neuronal local (8) d'un dispositif d'assistance au stationnement (3) du véhicule automobile (1) respectif, lequel sert à la reconnaissance des zones aptes au roulage ou aptes au stationnement dans un environnement (9) détecté par le dispositif de détection d'environnement (4) du véhicule automobile (1) respectif, avec l'information de profil renvoyée.

2. Procédé selon la revendication 1, le dispositif de détection d'environnement (4) dudit véhicule automobile (1) possédant une unité de caméra et/ou une unité radar et/ou une unité lidar et/ou une unité à ultrasons en tant qu'unité de capteur, et notamment le dispositif de détection d'environnement (4) de l'autre véhicule automobile (1) ne possédant pas tous les types d'unités de capteur que possède ledit véhicule automobile (1), de préférence seulement exactement un type de l'unité de capteur que possède ledit véhicule automobile (1).

3. Procédé selon l'une des revendications précédentes, seules étant communiquées les données d'environnement qui représentent l'environnement (9) détecté à partir d'une position clé, des caractéristiques de référence de l'environnement (9) étant détectées à partir de la position clé, lesquelles conviennent pour la localisation du véhicule automobile (1) dans l'environnement (9) pour une pluralité de positions du véhicule automobile (1).

4. Procédé selon l'une des revendications précédentes, les données d'environnement communiquées étant combinées avec une position globale (15), notamment avec une position globale (15) déterminée par un système de détection de position globale (14), laquelle a de préférence été déterminée avant la détection de l'environnement (9), et le réseau neuronal (12) dans le dispositif de calcul (11) externe au véhicule et/ou l'information de profil étant également combiné avec la position globale (15).

5. Procédé selon la revendication 4, la configuration selon l'étape e) et notamment aussi le renvoi selon l'étape d) n'étant effectués que lorsque le véhicule automobile (1) respectif s'arrête à l'intérieur d'une zone d'environnement prédéfinie autour de la position globale (15).

6. Procédé selon l'une des revendications précédentes, la détection selon l'étape a) et la communication selon l'étape b) étant accomplies par plusieurs véhicules automobiles différents et/ou plusieurs fois par ledit véhicule automobile (1) et l'entraînement selon la revendication c) étant effectué plusieurs fois avec les données d'environnement et les données de position respectives.

7. Procédé selon l'une des revendications précédentes, les réseaux neuronaux (8, 12) comprenant respectivement un réseau neuronal profond avec plusieurs couches dissimulées et/ou les réseaux neuronaux (8, 12) comprenant respectivement un réseau neuronal convolutif.

8. Dispositif d'assistance au stationnement (3) pour un véhicule automobile (1), comprenant
- un dispositif de détection d'environnement (4) qui est configuré pour détecter un environnement (9) du véhicule automobile (1) dans un parking (10) pour véhicules automobiles ;
- un dispositif d'émission (5) qui est configuré pour communiquer des données d'environnement générées par le dispositif de détection d'environnement (4), lesquelles représentent l'environnement (9) détecté, et des données de position associées aux données d'environnement respectives, lesquelles représentent au moins une position dans l'environnement (9) sur laquelle le véhicule automobile (1) a roulé ou est stationné, à un dispositif de calcul (11) externe au véhicule ; **caractérisé par**
- un dispositif de réception (5) qui est configuré pour recevoir une information de profil, laquelle caractérise un réseau neuronal (12) pour une reconnaissance des zones aptes au roulage ou aptes au stationnement dans l'environnement (9) détecté à l'aide des données d'environnement, par le dispositif de calcul (11) externe au véhicule ;
- le dispositif d'assistance au stationnement (3) est configuré pour configurer un réseau neuronal local (8) d'un dispositif d'assistance au stationnement (3), lequel sert à la reconnaissance des zones aptes au roulage ou aptes au stationnement dans l'environnement (9) détecté par le dispositif de détection d'environnement (4) du véhicule automobile (1), avec l'information de profil renvoyée.

9. Véhicule automobile (1) comprenant un dispositif d'assistance au stationnement (3) selon la revendication 8.

10. Système d'assistance au stationnement (2) pour au moins un véhicule automobile (1), comprenant au moins un dispositif d'assistance au stationnement (3) selon la revendication 8 ou au moins un véhicule automobile (1) selon la revendication 9 et comprenant un dispositif de calcul (11) externe au véhicule, le dispositif de calcul (11) externe au véhicule
- possédant un dispositif de réception destiné à recevoir des données d'environnement et des données de position communiquées par le dispositif d'émission (5) du dispositif d'assistance au stationnement (3) ;
- étant configuré pour entraîner un réseau neuronal (12) pour une reconnaissance des zones aptes au roulage ou aptes au stationnement dans l'environnement (9) détecté à l'aide des données d'environnement avec un processus d'apprentissage surveillé, lequel se base sur les données d'environnement et les données de position associées ; et en outre
- possédant un dispositif d'émission servant au renvoi de l'information de profil.
